# FASCICULE DE BREVET EUROPEEN

(11) **EP 2 257 924 B1**
(45) Date de publication et mention de la délivrance du brevet: **14.07.2021**
(21) Numéro de dépôt: 09709769.5
(22) Date de dépôt: 12.02.2009
(51) Int. Cl.: G06Q 30/02

(54) **PROCEDE POUR GENERER UNE IMAGE DE DENSITE D'UNE ZONE D'OBSERVATION**
VERFAHREN ZUR ERSTELLUNG EINES DICHTEBILDES EINES OBSERVATIONSGEBIETS
METHOD FOR GENERATING A DENSITY IMAGE OF AN OBSERVATION ZONE

(30) Priorité: 12.02.2008 FR 0850874
(43) Date de publication de la demande: 08.12.2010
(73) Titulaire: Cliris, 92200 Neuilly Sur Seine (FR); Zeller, Alexandre, 92200 Neuilly Sur Seine (FR)
(72) Inventeur: ZELLER, Alexandre, F-92200 Neuilly Sur Seine (FR); REVUE, Alexandre, F-75005 Paris (FR)
(74) Mandataire: IP Trust
(86) Numéro de dépôt international: PCT/FR2009/050225
(87) Numéro de publication internationale: WO 2009/101365

(56) Documents cités:
- WO-A-2006/097680
- WO-A-2008/008505
- US-A1- 2003 039 379
- US-B1- 6 967 674
- TAO ZHAO ET AL: "Segmentation and Tracking of Multiple Humans in Crowded Environments" 1 juillet 2008 (2008-07-01), IEEE TRANSACTIONS ON PATTERN ANALYSIS AND MACHINE INTELLIGENCE, IEEE SERVICE CENTER, LOS ALAMITOS, CA, US, PAGE(S) 1198 - 1211 , XP011224157 ISSN: 0162-8828 page 1198 - page 1205
- ASPROM: "3e rencontre des start-up des télécoms et du multimedia, issues des grandes écoles"[Online] 8 novembre 2006 (2006-11-08), pages 1-6, XP002500065 Extrait de l'Internet: URL:http://aist.enst.fr/docs/0610241240ASP ROM.pdf> [extrait le 2008-10-16]
- CLIRIS: "Marketing beharioural analysis solution"[Online] 5 octobre 2007 (2007-10-05), pages 1-4, XP002500066 Extrait de l'Internet: URL:http://web.archive.org/web/20071005083 215/www.cliris.net/benefices-frequentation .shtml> [extrait le 2008-10-16] & [Online] 5 octobre 2007 (2007-10-05), Extrait de l'Internet: URL:http://web.archive.org/web/20071005045 531/www.cliris.net/benefices-parcours.shtm l> [extrait le 2008-10-16] & [Online] 5 octobre 2007 (2007-10-05), Extrait de l'Internet: URL:http://web.archive.org/web/20071005130 852/www.cliris.net/benefices-interet.shtml > [extrait le 2008-10-16] & [Online] 5 octobre 2007 (2007-10-05), Extrait de l'Internet: URL:http://web.archive.org/web/20071005130 959/www.cliris.net/benefices-segment.shtml > [extrait le 2008-10-16]
- CAMILO CHANG D'OREA: "Hierarchical Partition-Based Representations of Motion-Coherent Regions For Video Object Segmentation"[Online] mai 2007 (2007-05), pages 7-25, XP002500067 Department of Signal Theory and Communications - Technical University of Catalonia Extrait de l'Internet: URL:http://gps-tsc.upc.es/imatge/_Camilo/t hesis/thesis.pdf> [extrait le 2008-10-16]
- VIDEOMINING CORPORATION: "Test Store Platform for retail strategy"[Online] 2006, pages 1-4, XP002500068 Extrait de l'Internet: URL:http://www.ipcctvcameras.co.uk/pdf/VMO verview.pdf> [extrait le 2008-10-16]
- TAO ZHAO ET AL: "Segmentation and Tracking of Multiple Humans in Crowded Environments", IEEE TRANSACTIONS ON PATTERN ANALYSIS AND MACHINE INTELLIGENCE, IEEE COMPUTER SOCIETY, USA, vol. 30, no. 7 31 August 2007 (2007-08-31), pages 1198-1211, XP011202125, ISSN: 0162-8828, DOI: 10.1109/TPAMI.2007.70770 [retrieved on 2007-08-31]

## Description

La présente invention se rapporte à un procédé pour générer une image de densité d'une zone d'observation sur un intervalle de temps donné. Elle trouve une application particulièrement intéressante mais non limitative dans le domaine de l'analyse comportementale par vision artificielle. Plus précisément, la présente invention peut s'appliquer à des systèmes dans lesquels on dispose d'au moins une caméra disposée en hauteur à proximité d'un objet d'intérêt qui peut être un écran publicitaire ou un produit marchand dans un magasin par exemple. Cette caméra est disposée de façon à filmer tout individu passant proche de l'objet d'intérêt. Le flux vidéo de la caméra est traité de façon notamment à réaliser des analyses comportementales.

Dans le domaine d'analyse comportementale, il existe de nombreux algorithmes relatifs à la détection faciale ou au suivi de regard permettant d'estimer l'intérêt que portent des individus passant à proximité des objets d'intérêt.

On connaît le document US 6967674 décrivant un procédé pour détecter le comportement de personnes traversant une pièce.

On connaît également le document US 2003/0039379 décrivant un procédé pour comptabiliser, dans une image, le nombre de personnes portant intérêt sur un objet. Cet intérêt peut se caractériser par le temps passé par chaque personne à observer l'objet ou encore l'expression du visage de ces personnes.

On connaît en outre le document Thao Zhao et al, « Segmentation and Tracking of Multiple Humans in Crowded Environments », IEEE Transactions on Pattern Analysis and machine intelligence, p. 1198-1211, décrivant une modélisation complexe du problème cherchant à résoudre simultanément la problématique d'apprentissage de fond, de détection/dénombrement de personnes, et d'appariement/suivi, cela par une estimation continue d'une fonction de vraisemblance globale. La génération de nouvelles cibles dans rapproche de ce document se fait à partir de trois critères : deux de détection de têtes, un de résidu de zone en mouvement.

La présente invention a pour but un nouveau procédé permettant d'exprimer d'une nouvelle façon l'attrait d'un objet d'intérêt dans une zone d'observation.

On atteint le but précité avec un procédé pour générer une image de densité d'une zone d'observation traversée par des individus sur un intervalle de temps donné, tel que définit dans l'objet de la revendication 1.

L'image de densité est de préférence une image dans laquelle on visualise le plan du sol de la zone d'observation.

Avec le système de l'invention, on élabore une carte de chaleur qui peut être une image en couleur : des zones rouges correspondant à des taux d'occupation élevés, et des zones bleues à des taux d'occupation faibles, la variation entre les couleurs se faisant de façon continue.

En fait, chaque surface élémentaire de la zone d'observation présente un niveau d'intensité proportionnel au taux d'occupation de cette surface élémentaire par des individus. Le taux d'occupation étant la durée totale pendant laquelle cette surface élémentaire a été occupée par tout individu.

L'invention est définie de la manière suivante : un procédé pour générer une image de densité d'une zone d'observation sur un intervalle de temps donné, dans lequel on acquiert une pluralité d'images de la zone d'observation au moyen d'une caméra, pour chaque image acquise on réalise les étapes suivantes : - extraction d'un fond fixe de l'image, - une étape a) de détection de zones de pixels « blobs » se détachant du fond fixe de l'image, - une étape b) de détection des individus, dans laquelle : b1) pour chaque blob, on génère plusieurs hypothèses de positions possibles d'individus au sein d'un modèle tridimensionnel de la zone d'observation en utilisant les caractéristiques de la caméra et une taille standard d'individu; et pour chaque position possible, on détecte un point visible d'un individu en appliquant un modèle tridimensionnel d'individu sur le blob correspondant, b2) dénombrement des individus pour chaque blob, c) pour chaque individu détecté, détermination des surfaces élémentaires occupées par cet individu, caractérisé en ce que ladite étape b) de détection des individus comporte en outre un traitement dudit point visible d'un individu pour établir la cohérence entre des positions de tête et de pied consistant à : - établir une correspondance entre des pixels de l'image et des points de l'espace correspondant, - considérer que les pixels d'un blob correspondant à un point visible d'un individu correspondent potentiellement à ses pieds ou à sa tête, et - réaliser une projection de ces pixels sur les plans du sol et des plans placés à hauteur standard de tête, la zone commune de projection des pieds et de la tête étant identifiée comme une position possible, le procédé comportant en outre une étape de génération d'une image de densité sur laquelle on incrémente d'un niveau d'intensité les surfaces élémentaires ainsi déterminées.

Selon une caractéristique non-revendiquée l'étape b1) de détection d'une tête d'individu s'effectue par analyse de contours.

En particulier, l'étape de détection de têtes comprend les étapes suivantes :
application d'un filtre de Canny sur l'image par rapport aux zones de pixels de façon à générer une image de contours des zones de pixels,
application d'une transformée en distance de façon à élaborer une carte de distances,
réalisation d'une convolution entre la carte de distance et un modèle de tête (template) de façon à obtenir une carte de convolution, et
application d'un algorithme de ligne de partage des eaux (watershed) de façon à détecter des têtes d'individus.

L'utilisation d'algorithme de ligne de partage des eaux pour la détection de têtes d'individus permet d'obtenir les positions les plus probables de têtes dans l'image sans avoir recours à des valeurs arbitraires (notamment de valeurs de seuils) ce qui limite les risques de non détection et garantit l'unicité d'une solution locale.

Selon l'invention, l'étape b1) de détection d'une tête d'individu s'effectue par détermination de cohérences entre des positions de tête et de pied. Pour ce faire :
- on établit une correspondance entre des pixels de l'image et des points de l'espace correspondant,
- on considère que les pixels d'un blob correspondent à un point visible d'un individu et potentiellement à ses pieds ou à sa tête, et
- on réalise une projection de ces pixels sur les plans du sol et des plans placés à hauteur standard de tête, la zone commune de projection des pieds et de la tête étant identifiée comme une position possible.

Avantageusement, le dénombrement consiste à identifier simultanément le nombre d'individus présents et leur position respective. En d'autres termes, on réalise une segmentation de groupes. En effet, dans la plupart des circonstances, les images proviennent d'une caméra ayant parfois un angle de visée oblique par rapport au sol, provoquant ainsi de nombreuses situations d'occlusion entre individus, il est alors difficile d'utiliser une recherche individu par individu. Pour cela, la présente invention propose donc une solution cherchant à détecter et dénombrer un groupe (identification simultanée du nombre de personnes présentes et de leur position respective), et non à détecter chaque individu séparément.

Selon une caractéristique de l'invention, l'identification des individus est effectuée à partir d'un modèle d'apparence à trois ellipses imitant un individu.

Ce modèle d'apparence est optimisé selon les critères suivants :
- minimisation du nombre d'individus,
- maximisation du nombre de pixels différents du fond et appartenant aux silhouettes,
- minimisation du nombre de pixels différents du fond et n'appartenant pas aux ellipses,
- minimisation du nombre de pixels appartenant au fond et aux ellipses, et
- minimisation de la distance des contours d'un modèle 2D/3D.

Ensuite, l'optimisation est réalisée au moyen d'un algorithme itératif de descente de gradient.

Selon une caractéristique avantageuse de l'invention, on répartit la convergence de l'algorithme itératif sur des images successives. La convergence de l'algorithme itératif vers un dénombrement optimal des individus peut prendre un temps considérable. Avec la présente invention, on se contente d'une solution partielle approchée sur une image au moment de passer à l'image suivante; cette solution approchée servant de point de départ pour l'image suivante.

Selon une variante avantageuse de l'invention, l'étape b) de détection des individus peut comprendre les étapes suivantes :
à partir d'un modèle 3D de la zone d'observation, d'un modèle 3D d'individu, et des caractéristiques liées à l'appareil d'acquisition de ladite pluralité d'images d'observation, on réalise une projection perspective dans l'image en cours de chaque surface élémentaire de la zone d'observation de façon à obtenir une projection 2D des modèles d'individu ;
on calcule la correspondance des modèles 2D sur chaque zone de pixels de façon à obtenir une carte de densité de probabilité de présence ; et
on réalise une recherche de maxima par l'algorithme de ligne de partage des eaux de façon à déterminer les individus détectés.

De préférence, les caractéristiques de l'appareil d'acquisition comprennent le champ de vision, le positionnement et la distorsion.

D'une façon générale, selon l'invention, l'extraction du fond fixe de l'image est obtenue en moyennant les valeurs des pixels de l'image au cours du temps.

Selon l'invention, pour tenir compte des faibles variations des valeurs des pixels, on peut modéliser la valeur de chaque pixel de fond par une distribution de probabilités. Cette distribution peut être représentée par une gaussienne, ou plus sobrement par une valeur moyenne et deux valeurs min et max.

Par ailleurs, afin de minimiser autant que possible l'influence des objets n'appartenant pas au fond, avant de moyenner les valeurs des pixels de l'image, il est possible d'effectuer une détection instantanée de mouvement par soustraction d'images successives et d'appliquer un seuil afin d'obtenir un masque correspondant aux pixels qui ne seront pas moyennés.

D'autres avantages et caractéristiques de l'invention apparaîtront à l'examen de la description détaillée d'un mode de mise en œuvre nullement limitatif, et des dessins annexés, sur lesquels :
La figure 1 est une vue schématique générale d'un rayon de magasin surveillé par caméra,
La figure 2 est une vue schématique d'une image de densité d'une zone d'observation selon l'invention,
La figure 3 est une vue générale d'un organigramme illustrant différentes étapes d'un procédé selon l'invention,
Les figures 4 et 5 sont des images provenant d'une caméra de surveillance sans et avec des blobs apparents,
La figure 6 est une vue d'un organigramme détaillé d'un algorithme de détection de têtes d'individus,
La figure 7 illustre un modèle d'apparence à trois ellipses selon l'invention,
La figure 8 est un schéma simplifié illustrant différentes étapes d'une variante d'algorithme de détection d'individus,
La figure 9 est une vue de l'algorithme décrit sur la figure 8,
La figure 10 est un schéma simplifié illustrant la projection des blobs,
La figure 11 est un schéma simplifié illustrant une zone de correspondance entre des projections de tête et de pied, et
La figure 12 est un schéma simplifié illustrant la densité de passage des personnes au niveau du sol.

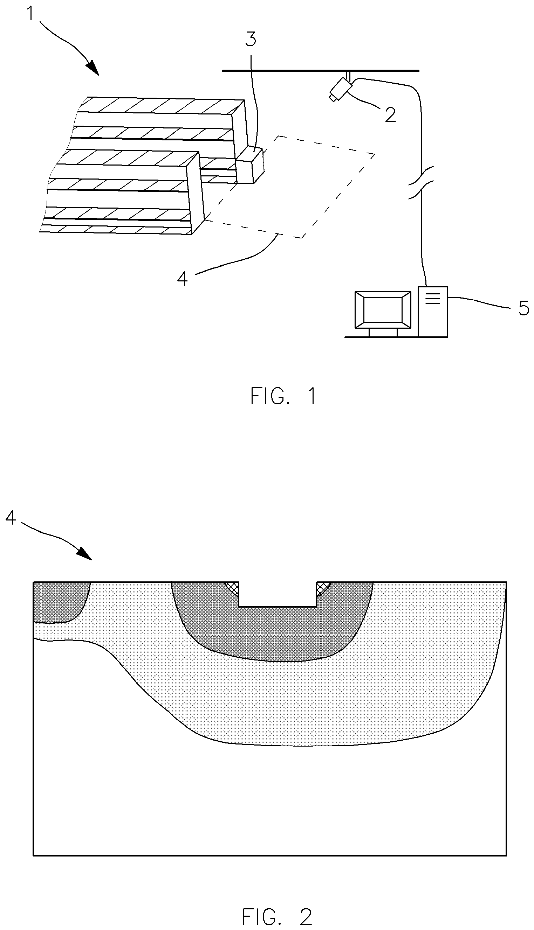

Sur la figure 1 on voit un rayon 1 d'un magasin équipé d'une caméra de surveillance 2 disposée en hauteur. Cette caméra de surveillance est fixée au plafond et est disposée en oblique de façon à filmer un objet d'intérêt 3. On définit une zone d'observation 4 qui est une surface autour de l'objet d'intérêt 3 et comprise dans le champ de vision de la caméra 2. La présente invention a pour but d'élaborer une image de densité de cette zone d'observation. Il s'agit d'évaluer le taux d'occupation de chaque surface élémentaire au sein de la zone d'observation par tout individu et sur un intervalle de temps donné. L'estimation de ces taux sur l'ensemble de la zone d'observation est ensuite représentée sous la forme d'une carte de densité, offrant une visualisation comparative des régions plus ou moins fréquentées de la zone d'observation. Une image de densité est représentée sur la figure 2 où les régions les plus fréquentées sont plus foncées que les régions les moins fréquentées. On distingue une demi-couronne foncée autour de l'objet d'intérêt 3.

La carte de densité peut également être visualisée sous la forme d'une image thermique, pouvant être représentée en perspective sur une image de traitement ou en vue de dessus en superposition du plan de la surface observée.

Sur la figure 1, on voit que la caméra de surveillance 2 est reliée à un serveur distant 5 destiné à mettre en œuvre le procédé selon l'invention.

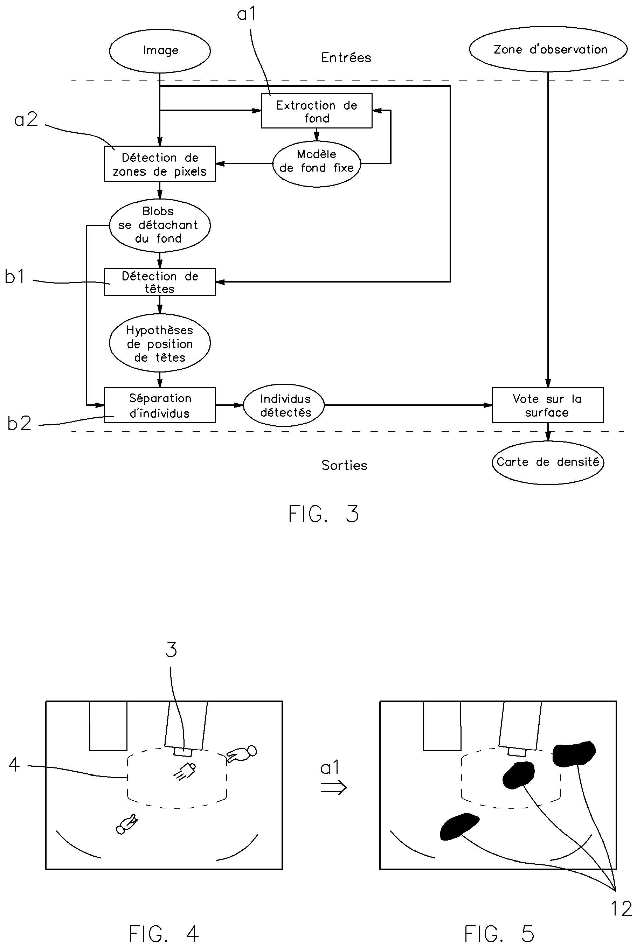

Sur la figure 3, on voit un organigramme d'un procédé selon l'invention mis en œuvre dans le serveur distant 5. Cet organigramme a pour entrées une image acquise par la caméra de surveillance 2 et la zone d'observation 4. La sortie correspond à une incrémentation de la valeur d'intensité d'une ou plusieurs surfaces élémentaires de l'image de densité pour la zone d'observation.

A l'étape a1, on extrait le fond de l'image acquise de façon à obtenir un modèle de fond fixe. L'algorithme d'extraction du fond peut être de type itératif sur notamment plusieurs images ou un flux d'image vidéo. L'approche la plus simple pour extraire le fond consiste à moyenner les valeurs des pixels au cours du temps. La contribution à la moyenne d'un objet en mouvement sera d'autant plus faible que son mouvement est rapide par rapport à la cadence des images.

Plus précisément, l'extraction de fond selon l'invention conduit à une modélisation de niveaux de gris, gradients et orientations de gradients moyens et de leurs écarts types. A titre d'exemple, sur la figure 4 on voit une image acquise par la caméra de surveillance 2. On distingue des individus à l'intérieur et hors de la zone d'observation 4 en pointillée. Sur la figure 5, on a réalisé l'étape a1 de sorte que les éléments en mouvements hors fond fixe sont symbolisés par des blobs 12.

A l'étape a2, on réalise une détection de zone en comparant l'image et le fond, et en extrayant des zones de pixels, appelées « blobs », n'appartenant pas au fond.

A l'étape b1, on réalise une détection de l'ensemble des positions possibles de personnes. Cette étape peut être réalisée de deux façons :
- en effectuant une détection de tête par analyse de contours ; pour ce faire on reçoit en entrée les blobs précédemment détectés et ladite image acquise ;
- en recherchant des cohérences entre des positions de tête et de pied. Pour ce faire on reçoit en entrée les blobs précédemment détectés et ladite image acquise.

Le résultat de l'étape b1 est un ensemble d'hypothèses de position de têtes ou d'appariement tête/pied.

Puis, à l'étape b2, on réalise un dénombrement des individus. Plus précisément, on réalise une identification du nombre d'individus dans chaque blob et une estimation de leur position. En fait on élimine les fausses hypothèses de façon à identifier les positions réelles.

En ce qui concerne la méthode de détection de tête.

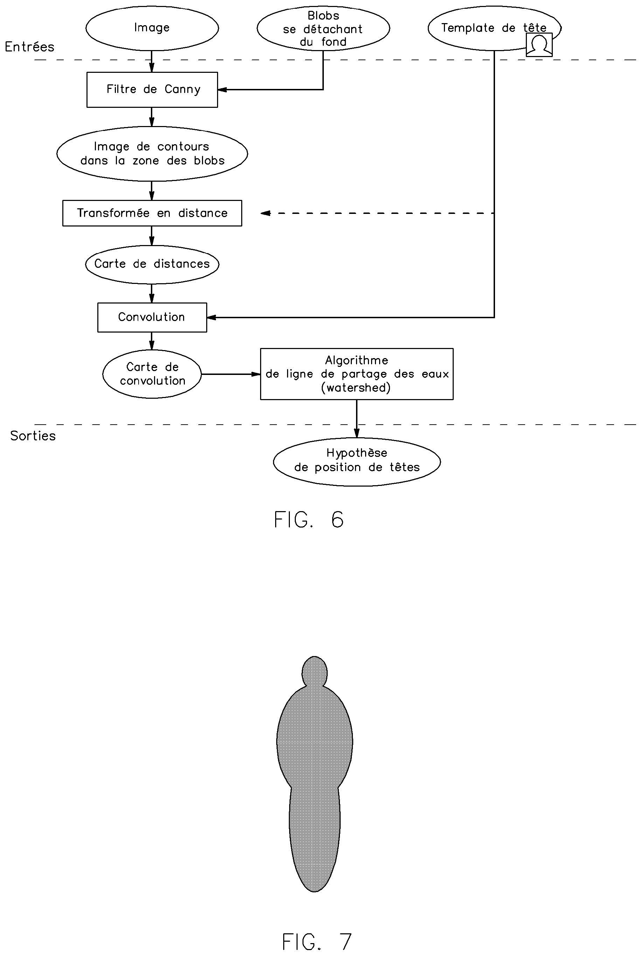

Sur la figure 6, on voit un peu plus en détail un algorithme de détection de têtes de l'étape b1. En entrée, on distingue l'image acquise, les blobs se détachant du fond, et un modèle de tête appelé « template ». La première étape consiste à appliquer un filtre de Canny pour extraire les contours des têtes d'individus sur l'image acquise de façon à obtenir une image de contours dans la zone des blobs.

Ensuite, on réalise une transformée en distance. Il s'agit d'un calcul d'une carte de distance entre contours. C'est un calcul rapide et stable de la corrélation du « template » de tête avec les contours. La sortie de cette étape est une carte de distances.

Ensuite, on réalise une convolution entre la carte de distances et le « template » de façon à obtenir une carte de convolution. La convolution comprend un calcul de la corrélation du « template » de tête avec les contours.

Enfin, on applique un algorithme de ligne de partage des eaux (« watershed » en langue anglaise) pour localiser et quantifier des maxima de corrélation, et déterminer des maxima de probabilité de présence de têtes dans l'image acquise. On obtient en sortie une hypothèse sur la position des têtes.

En ce qui concerne la méthode de cohérence pied-tête.

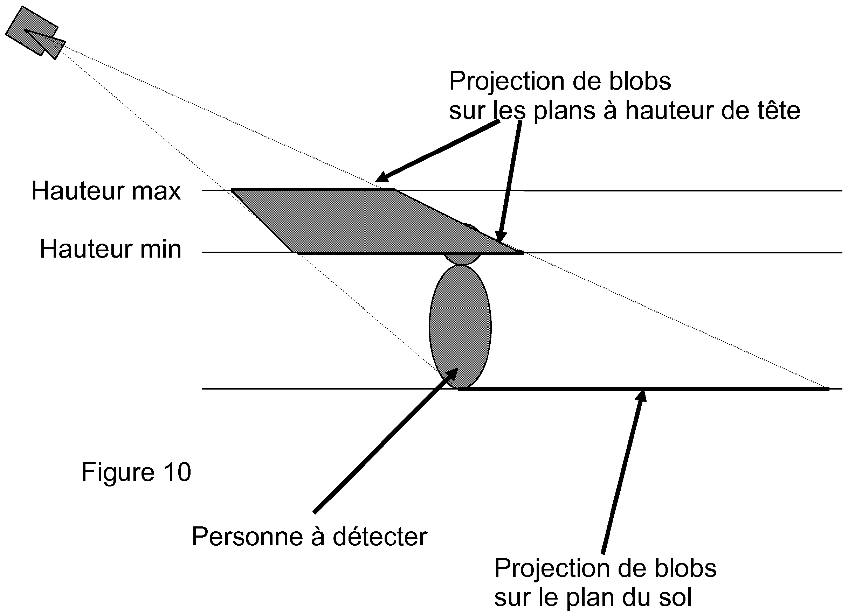

Sur la figure 10, on voit un peu plus en détail un algorithme de recherche de cohérence tête/pied de l'étape b1. En entrée, on considère les blobs se détachant du fond, et la calibration de la caméra permettant d'établir une correspondance entre les pixels de l'image et les points de l'espace leur correspondant.

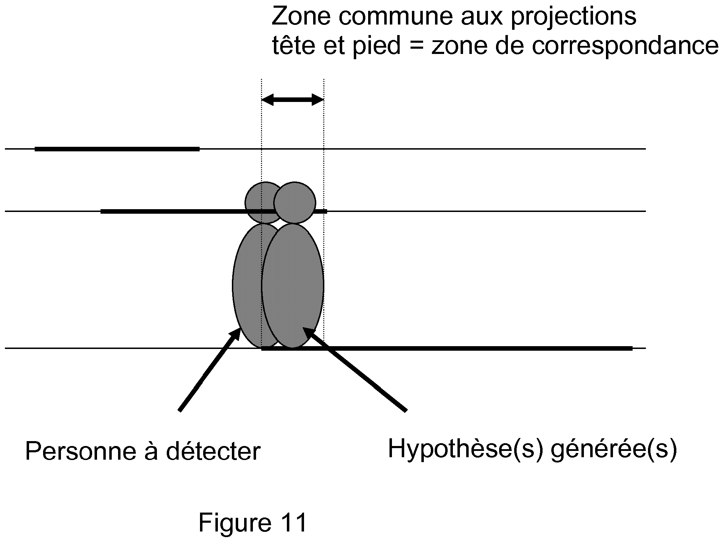

Il est considéré que les pixels d'un blob correspondent à un point visible d'une personne à détecter, et potentiellement à ses pieds ou à sa tête. La projection de ces pixels sur les plans du sol et des plans placés à hauteur standard de tête délimite donc des zones où seraient susceptibles de se trouver des personnes. La conjonction de ces projections, représentée dans la figure 11, permet de réduire ces zones à des espaces localisés, correspondant principalement aux positions réelles envisagées de personnes dans la scène.

Sur la figure 7, on voit un exemple de modèle d'apparence d'un individu. Ce modèle est utilisé à l'étape b2. En particulier, la détection d'hypothèses de têtes ou de zones de cohérence pied-tête de l'étape b1 génère un grand nombre de fausses détections. Pour aboutir à l'interprétation complète de la scène, on cherche à identifier les individus à partir d'un modèle d'apparence à trois ellipses de la figure 7 (silhouettes pleines), en optimisant les critères suivants :
- minimiser le nombre de personnes,
- maximiser le nombre de pixels différents du fond et appartenant aux silhouettes,
- minimiser le nombre de pixels différents du fond et n'appartenant pas aux silhouettes,
- minimiser le nombre de pixels appartenant au fond et aux silhouettes, et/ou
- minimiser la distance des contours d'un modèle 2D/3D.

La convergence vers la solution optimale s'effectue par des méthodes itératives de type descente de gradient. L'évaluation de cette solution à partir de la superposition des modèles d'apparence permet de gérer naturellement les cas d'occlusion.

La détection selon l'invention a comme particularité de s'effectuer dans le repère tridimensionnel de la surface observée, les caméras étant calibrées avec précision dans cet environnement ; la calibration consiste à estimer avec précision la position et l'orientation de la caméra, ainsi que ses propriétés géométriques intrinsèques telles que focale, champ, distorsions...

Ainsi la carte de chaleur réalisée peut-elle être directement superposée au plan de la surface analysée, et seuls sont comptabilisés les endroits correspondant à la position réelle des individus détectés (zone située au niveau de leurs pieds), et non l'ensemble des positions au sol correspondant aux pixels des blobs.

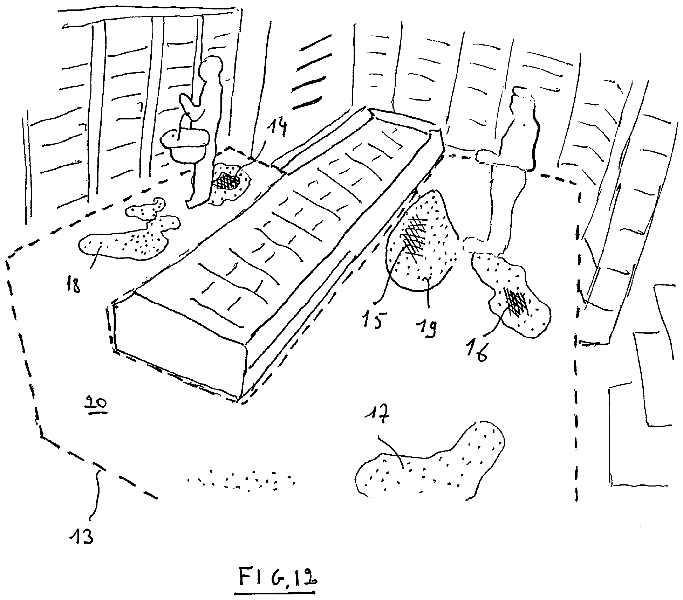

Sur la figure 12, les personnes détectées (dont les contours sont surlignés) génèrent alors une mesure uniquement à l'endroit correspondant à la position de leurs pieds. Cette mesure peut ainsi être visualisée dans un repère absolu 13 du plan. Les zones de forte densité 14, 15 et 16 correspondent aux endroits où les personnes se sont arrêtées le plus longtemps. Sur l'image de la figure 12, ces zones peuvent être indiquées en rouge. Les zones 17, 18 et 19 de densité intermédiaire peuvent être représentées en blanc, alors que les zones 20 de densité faible, voire nulle, sont représentées en bleue.

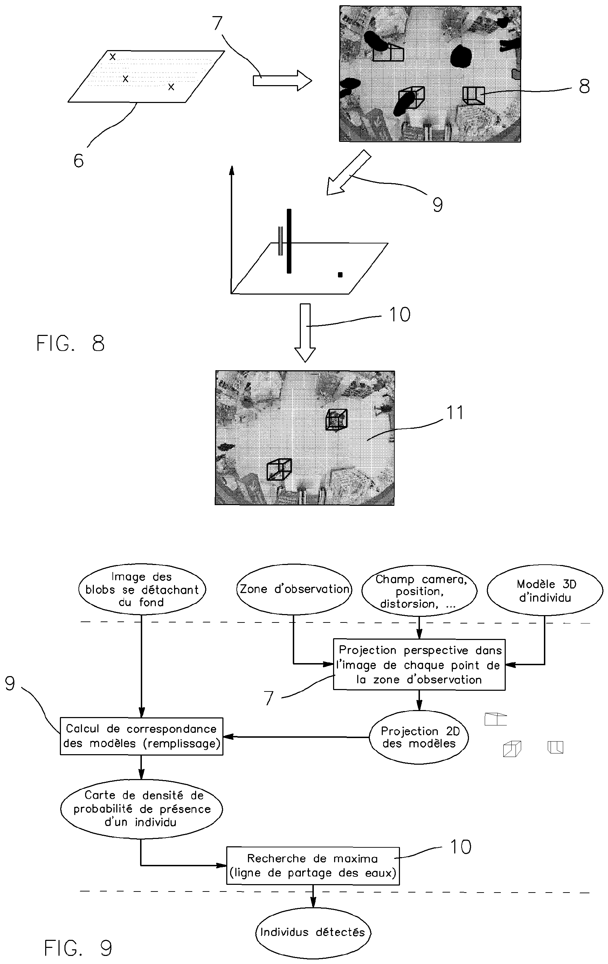

Sur la figure 8, on voit un autre exemple de procédé de détection d'individus. On fait l'hypothèse d'une taille standard de personne. La zone d'observation est considérée dans ses coordonnées réelles 3D, une "fenêtre de recherche" 6, en fait un parallélépipède 8 de la taille d'une personne, est déplacé dans cette zone suivant un maillage régulier. Pour chaque position de cette fenêtre de recherche, la projection 7 du parallélépipède dans l'image acquise est calculée, et la vraisemblance de présence d'une personne à cette position est évaluée en fonction du remplissage de ce parallélépipède par des pixels des blobs. Le remplissage est représenté sur le graphe 9.

Cette variante permet donc de gérer la perspective de la scène, ainsi que les défauts de la caméra tels que la distorsion, ce paramètre étant pris en compte dans le calcul de la projection des parallélépipèdes.

Cette variante permet également de prendre en compte le masquage par des objets : si l'on sait qu'une zone correspond à un objet derrière lequel des personnes seraient susceptibles d'être partiellement masquées, l'estimation de la probabilité de présence est corrigée en fonction du nombre de pixels de l'objet masquant situés dans la fenêtre de recherche.

Sur l'image 11 de la figure 8, après lissage, des maxima locaux de vraisemblance sont calculés en 11 par une méthode de ligne de partage des eaux sur la vraisemblance inversée; chaque bassin est considéré comme une détection possible.

Afin d'éviter des détections multiples d'un même individu (l'une des détections correspondant à son tronc, et est interprétée comme une personne plus éloignée), les détections obtenues à l'étape précédente sont classées et considérées par ordre croissant de distance les séparant de la caméra de surveillance. On valide les détections de la plus proche à la plus lointaine.

Pour qu'une détection soit validée, on prévoit à ce que le parallélépipède soit rempli par des pixels d'un blob au-delà d'un taux prédéterminé. Chaque détection validée efface du blob les pixels contenus dans son parallélépipède, afin d'éviter les détections multiples.

Les détections validées inscrivent leur position sur l'image de densité en ajoutant à leur position respective une gaussienne à un tableau d'accumulation.

Sur la figure 9, on voit un exemple d'organigramme décrivant cette variante. En entrée, on prend en compte la zone d'observation 3D, les caractéristiques de la caméra de surveillance (champ, position, distorsion,...) et un modèle d'individu, de façon à réaliser la projection perspective 7 de chaque surface élémentaire de la zone d'observation. On obtient un modèle 2D des modèles 3D d'individu. Le calcul 9 de correspondance des modèles (le remplissage) entre une image des blobs et le modèle 2D des modèles permet d'établir une carte de densité de probabilité de présence de chaque individu. En 11, on recherche donc les maxima par ligne de partage des eaux (« watershed ») de façon à obtenir les individus détectés.

La présente invention concerne également une application logicielle ou programme d'ordinateur comprenant des instructions pour exécuter les étapes définies dans un procédé selon l'invention.

L'invention concerne également un moyen de stockage informatique tel qu'un CR-ROM, une clef USB, une mémoire flash... stockant un code de programme d'application qui, lors de son exécution par un processeur numérique, fournit des fonctionnalités telles que définies dans un quelconque procédé selon la présente invention.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour générer une image de densité d'une zone d'observation traversée par des individus sur un intervalle de temps donné, dans lequel procédé on acquiert une pluralité d'images de la zone d'observation au moyen d'une caméra, pour chaque image acquise on réalise les étapes suivantes :
- extraction d'un fond fixe de l'image,
- une étape a) de détection de zones de pixels « blobs » se détachant du fond fixe de l'image,
- une étape b) de détection des individus, dans laquelle :
bl) pour chaque blob, on génère plusieurs hypothèses de positions possibles d'individus au sein d'un modèle tridimensionnel de la zone d'observation en utilisant les caractéristiques de la caméra et une taille standard d'individu;
et pour chaque position possible, on détecte un point visible d'un individu en appliquant un modèle tridimensionnel d'individu sur le blob correspondant,
b2) dénombrement des individus pour chaque blob,
c) pour chaque individu détecté, détermination des surfaces élémentaires occupées par cet individu,
**caractérisé en ce que**
ladite étape b) de détection des individus comporte en outre un traitement dudit point visible d'un individu pour établir la cohérence entre des positions de tête et de pied consistant à :
- établir une correspondance entre des pixels de l'image et des points de l'espace correspondant,
- considérer que les pixels d'un blob correspondant à un point visible d'un individu correspondent potentiellement à ses pieds ou à sa tête, et
- réaliser une projection de ces pixels sur les plans du sol et des plans placés à hauteur standard de tête, la zone commune de projection des pieds et de la tête étant identifiée comme une position possible,
le procédé comportant en outre une étape de génération d'une image de densité sur laquelle on incrémente d'un niveau d'intensité les surfaces élémentaires ainsi déterminées.

2. Procédé selon la revendication 1, **caractérisé en ce que** l'étape bl) de détection d'une tête d'individu s'effectue par analyse de contours.

3. Procédé selon la revendication 2, **caractérisé en ce que** l'étape de détection de têtes comprend les étapes suivantes :
- application d'un filtre de Canny sur l'image par rapport aux zones de pixels de façon à générer une image de contours des zones de pixels,
- application d'une transformée en distance de façon à élaborer une carte de distances, réalisation d'une convolution entre la carte de distance et un modèle de tête (template) de façon à obtenir une carte de convolution, et application d'un algorithme de ligne de partage des eaux (watershed) de façon à détecter des têtes d'individus.

4. Procédé selon l'une quelconque des revendications précédentes, **caractérisé en ce que** le dénombrement consiste à identifier simultanément le nombre d'individus présents et leur position respective.

5. Procédé selon la revendication précédente, **caractérisé en ce que** l'identification des individus est effectuée à partir d'un modèle d'apparence à trois ellipses imitant un individu.

6. Procédé selon la revendication précédente, **caractérisé en ce que** le modèle d'apparence est optimisé selon les critères suivants :
- minimisation du nombre d'individus,
- maximisation du nombre de pixels différents du fond et appartenant aux silhouettes, minimisation du nombre de pixels différents du fond et n'appartenant pas aux ellipses, - minimisation du nombre de pixels appartenant au fond et aux ellipses, et minimisation de la distance des contours d'un modèle 2D/3D.

7. Procédé selon la revendication précédente, **caractérisé en ce que** l'optimisation est réalisée au moyen d'un algorithme itératif de descente de gradient.

8. Procédé selon la revendication précédente, **caractérisé en ce qu'**on répartit la convergence de l'algorithme itératif sur plusieurs images successives.

9. Procédé selon l'une quelconque des revendications précédentes, **caractérisé en ce que** les caractéristiques de la caméra comprennent le champ de vision, le positionnement et la distorsion.

10. Procédé selon l'une quelconque des revendications précédentes, **caractérisé en ce que** l'extraction du fond fixe de l'image est obtenue en moyennant les valeurs des pixels de l'image au cours du temps.

11. Procédé selon la revendication précédente, **caractérisé en ce qu'**on modélise la valeur de chaque pixel de fond par une distribution de probabilités.

12. Procédé selon la revendication 10 ou 11, **caractérisé en ce qu'**avant de moyenner les valeurs des pixels de l'image, on réalise une détection instantanée de mouvement par soustraction d'images successives et on applique un seuil afin d'obtenir un masque correspondant aux pixels qui ne seront pas moyennes.

## Patentansprüche

1. Verfahren zum Erzeugen eines Dichtebildes eines Beobachtungsbereichs, der von Personen in einem gegebenen Zeitintervall durchquert wird, wobei bei dem Verfahren mehrere Bilder des Beobachtungsbereichs mittels einer Kamera erfasst werden, wobei für jedes aufgenommene Bild die folgenden Schritte ausgeführt werden:
- Extrahieren eines festen Hintergrundes des Bildes,
- ein Schritt a) zum Erkennen von Bereichen von "Blob"-Pixeln, die sich vom festen Hintergrund des Bildes abheben,
- ein Schritt b) zum Erkennen von Personen, wobei:
b1) für jeden Blob mehrere Hypothesen möglicher Positionen von Personen innerhalb eines dreidimensionalen Modells des Beobachtungsbereichs unter Verwendung der Eigenschaften der Kamera und einer Standardgröße der Person erzeugt werden;
und für jede mögliche Position ein sichtbarer Punkt einer Person erkannt wird, indem ein dreidimensionales Modell einer Person auf den entsprechenden Blob angewendet wird,
b2) Zählung der Personen für jeden Blob,
c) für jede erkannte Person die Bestimmung der von dieser Person eingenommenen Elementarflächen,
**dadurch gekennzeichnet,**
**dass** der Schritt b) zum Erkennen von Personen ferner ein Verarbeiten des sichtbaren Punktes einer Person aufweist, um eine Kohärenz zwischen einer Kopf- und einer Fußposition herzustellen, bestehend aus Folgendem:
- Herstellen einer Entsprechung zwischen Pixeln des Bildes und Punkten des entsprechenden Raumes,
- Berücksichtigen, dass die Pixel eines Blobs, die einem sichtbaren Punkt einer Person entsprechen, möglicherweise ihren Füßen oder ihrem Kopf entsprechen und
- Projizieren dieser Pixel auf die Grundebenen und Ebenen, die in Standardkopfhöhe platziert sind, wobei der gemeinsame Projektionsbereich der Füße und des Kopfes als eine mögliche Position identifiziert wird,
wobei das Verfahren ferner einen Schritt zum Erzeugen eines Dichtebildes aufweist, auf dem die so bestimmten Elementarflächen um ein Intensitätsniveau inkrementiert werden.

2. Verfahren nach Anspruch 1, **dadurch gekennzeichnet, dass** der Schritt b1) zum Erkennen eines Kopfes einer Person durch Konturanalyse erfolgt.

3. Verfahren nach Anspruch 2, **dadurch gekennzeichnet, dass** der Schritt zum Erkennen von Köpfen die folgenden Schritte umfasst:
- Anwendung eines Canny-Algorithmus auf das Bild in Bezug auf die Pixelbereiche, um ein Bild der Konturen der Pixelbereiche zu erzeugen,
- Anwendung einer Abstandstransformation, um eine Abstandskarte zu erstellen, Ausführen einer Faltung zwischen der Abstandskarte und einem Kopfmodell (Schablone), um eine Faltungskarte zu erhalten, und Anwendung eines Wasserscheidenalgorithmus (Watershed) zur Erkennung von Personenköpfen.

4. Verfahren nach einem der vorhergehenden Ansprüche, **dadurch gekennzeichnet, dass** die Zählung darin besteht, gleichzeitig die Anzahl der anwesenden Personen und ihre jeweilige Position zu identifizieren.

5. Verfahren nach dem vorhergehenden Anspruch, **dadurch gekennzeichnet, dass** die Identifizierung der Personen von einem Erscheinungsmodell mit drei Ellipsen durchgeführt wird, das eine Person imitiert.

6. Verfahren nach dem vorhergehenden Anspruch, **dadurch gekennzeichnet, dass** das Erscheinungsmodell nach den folgenden Kriterien optimiert wird:
- Minimierung der Anzahl der Personen,
- Maximierung der Anzahl von Pixeln, die sich vom Hintergrund unterscheiden und zu den Silhouetten gehören, Minimierung der Anzahl der Pixel, die sich vom Hintergrund unterscheiden und nicht zu den Ellipsen gehören, - Minimierung der zum Hintergrund und zu den Ellipsen gehörenden Pixel und Minimierung des Abstands von Konturen eines 2D/3D-Modells.

7. Verfahren nach dem vorhergehenden Anspruch, **dadurch gekennzeichnet, dass** die Optimierung mittels eines iterativen Gradientenabstiegsalgorithmus ausgeführt wird.

8. Verfahren nach dem vorhergehenden Anspruch, **dadurch gekennzeichnet, dass** die Konvergenz des iterativen Algorithmus über mehrere aufeinanderfolgende Bilder verteilt ist.

9. Verfahren nach einem der vorhergehenden Ansprüche, **dadurch gekennzeichnet, dass** die Eigenschaften der Kamera das Sichtfeld, die Positionierung und die Verzerrung umfassen.

10. Verfahren nach einem der vorhergehenden Ansprüche, **dadurch gekennzeichnet, dass** die Extraktion des festen Hintergrundes des Bildes erhalten wird, indem die Werte der Pixel des Bildes über die Zeit gemittelt werden.

11. Verfahren nach dem vorhergehenden Anspruch, **dadurch gekennzeichnet, dass** der Wert jedes Hintergrundpixels durch eine Wahrscheinlichkeitsverteilung modelliert wird.

12. Verfahren nach Anspruch 10 oder 11, **dadurch gekennzeichnet, dass** vor dem Mitteln der Werte der Pixel des Bildes eine sofortige Erkennung der Bewegung durch Subtraktion aufeinanderfolgender Bilder ausgeführt wird und ein Schwellenwert angewendet wird, um eine entsprechende Maske für Pixel zu erhalten, die nicht gemittelt werden.

## Claims

1. Method for generating a density image of an observation area traversed by individuals over a given time interval, in which method a plurality of images of the observation area are acquired by means of a camera, and the following steps are carried out for each acquired image:
- extracting a fixed background of the image,
- a step a) of detecting "blob" pixel areas that stand out from the fixed background of the image,
- a step b) of detecting individuals, in which:
b1) for each blob, multiple hypotheses of possible positions of individuals within a three-dimensional model of the observation area are generated using the characteristics of the camera and a standard individual size;
and for each possible position, a visible point of an individual is detected by applying a three-dimensional individual model to the corresponding blob,
b2) counting the individuals for each blob,
c) for each detected individual, determining the elementary surfaces occupied by this individual,
**characterized in that**
said step b) of detecting individuals further comprises processing said visible point of an individual to establish consistency between head and foot positions, consisting of:
- establishing a correspondence between pixels of the image and points of the corresponding space,
- considering that the pixels of a blob corresponding to a visible point of an individual potentially correspond to his feet or his head, and
- projecting these pixels onto the ground planes and planes placed at standard head height, the common projection area of the feet and the head being identified as a possible position,
the method further comprising a step of generating a density image on which the elementary surfaces thus determined are incremented by an intensity level.

2. Method according to claim 1, **characterized in that** step b1) of detecting an individual's head is carried out by contour analysis.

3. Method according to claim 2, **characterized in that** the step of detecting heads comprises the following steps:
- applying a Canny filter to the image with respect to the pixel areas so as to generate an image of the contours of the pixel areas,
- applying a distance transform so as to produce a distance map, realizing a convolution between the distance map and a head model (template) so as to obtain a convolution map, and applying a watershed algorithm so as to detect the heads of individuals.

4. Method according to any of the preceding claims, **characterized in that** the count consists in simultaneously identifying the number of individuals present and their relevant position.

5. Method according to the preceding claim, **characterized in that** the identification of the individuals is carried out on the basis of a three-ellipsis appearance model which imitates an individual.

6. Method according to the preceding claim, **characterized in that** the appearance model is optimized according to the following criteria:
- minimizing the number of individuals,
- maximizing the number of pixels different from the background and belonging to the silhouettes, minimizing the number of pixels different from the background and not belonging to the ellipses, - minimizing the number of pixels belonging to the background and to the ellipses, and minimizing the distance of the contours of a 2D/3D model.

7. Method according to the preceding claim, **characterized in that** the optimization is carried out by means of an iterative gradient descent algorithm.

8. Method according to the preceding claim, **characterized in that** the convergence of the iterative algorithm is distributed over multiple successive images.

9. Method according to any of the preceding claims, **characterized in that** the characteristics of the camera include field of view, positioning and distortion.

10. Method according to any of the preceding claims, **characterized in that** the extraction of the fixed background of the image is obtained by averaging the values of the pixels of the image over time.

11. Method according to the preceding claim, **characterized in that** the value of each background pixel is modeled by a probability distribution.

12. Method according to either claim 10 or claim 11, **characterized in that**, before averaging the values of the pixels of the image, an instantaneous detection of movement is carried out by subtraction of successive images and a threshold is applied in order to obtain a mask corresponding to the pixels that will not be averaged.
